(19) **Europäisches Patentamt European Patent Office Office européen des brevets**

(11) **EP 1 348 275 B1**

(12) **FASCICULE DE BREVET EUROPEEN**

(45) Date de publication et mention de la délivrance du brevet:
**14.10.2009 Bulletin 2009/42**

(21) Numéro de dépôt: **01271712.0**

(22) Date de dépôt: **20.11.2001**

(51) Int Cl.:
**H04L 9/06** (2006.01)

(86) Numéro de dépôt international:
**PCT/FR2001/003646**

(87) Numéro de publication internationale:
**WO 2002/051064 (27.06.2002 Gazette 2002/26)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

Gegenmaßnahmeverfahren in einer elektronischen Komponente für einen Verschlüsselungsalgorithms mit geheimem Schlüssel

Counter-measure method in an electronic component for a secret key encryption algorithm

(84) Etats contractants désignés:
**AT BE CH CY DE DK ES FI FR GB GR IE IT LI LU MC NL PT SE TR**

(30) Priorité: **19.12.2000 FR 0016579**

(43) Date de publication de la demande:
**01.10.2003 Bulletin 2003/40**

(73) Titulaire: **Gemalto SA**
**92190 Meudon (FR)**

(72) Inventeur: **CORON, Jean-Sébastien**
**F-75015 PARIS (FR)**

(56) Documents cités:
- **CORON J -S ET AL: "On Boolean and arithmetic masking against differential power analysis" CRYPTOGRAPHIC HARDWARE AND EMBEDDED SYSTEMS - CHES 2000. SECOND INTERNATIONAL WORKSHOP. PROCEEDINGS (LECTURE NOTES IN COMPUTER SCIENCE VOL. 1965), CRYPTOGRAPHIC HARDWARE AND EMBEDDED SYSTEMS - CHES 2000. SECOND INTERNATIONAL WORKSHOP. PROCEEDINGS, WOR, 17 août 2000 (2000-08-17), pages 231-236, XP000989986 2000, Berlin, Germany, Springer-Verlag, Germany ISBN: 3-540-41455-X**

**Description**

La présente invention concerne un procédé de contre-mesure pour un algorithme de chiffrement à clé secrète.

Il est apparu que l'implémentation sur carte à puce d'un algorithme de chiffrement à clé secrète était vulnérable à des attaques consistant en une analyse différentielle de consommation de courant permettant de retrouver la clé secrète. Ces attaques sont appelées attaques DPA, acronyme pour Differential Power Analysis. Le principe de ces attaques DPA repose sur le fait que la consommation en courant du microprocesseur exécutant des instructions varie selon la donnée manipulée.

Il existe de nombreux algorithmes à clé secrète dans lesquels l'algorithme effectue des manipulations bits par bits d'une donnée qui dépend du message à chiffrer.

Par exemple, lorsque l'algorithme de chiffrement comprend une permutation de données, l'implémentation sur carte à puce de cette permutation fait intervenir des manipulations bits par bits de la donnée à permuter.

En analysant la consommation de courant lors de l'exécution par le microprocesseur de ces manipulations bits par bits, il est possible de retrouver une partie ou la totalité de la donnée manipulée.

La connaissance de cette donnée fournit des informations sur les résultats intermédiaires de l'exécution de l'algorithme de chiffrement, qui permettent de retrouver la clef secrète de chiffrement.

Dans l'algorithme de chiffrement DES (pour Data Encryption Standard), l'algorithme chiffre un message clair de 64 bits en un message chiffré de 64 bits avec une clé de 64 bits comprenant 8 bits de parité. L'algorithme DES comprend 16 tours.

A chaque tour, l'algorithme DES effectue les manipulations suivantes :

1) Expansion-permutation avec la partie droite de la donnée en entrée. Cette opération fait intervenir des manipulations bits par bits de la donnée.
2) Opération de type OU-EXCLUSIF avec une sous-clé de la clé secrète.
3) Lecture dans la table de type SBOX.
4) Permutation de la donnée. Cette opération fait intervenir des manipulations bits par bits de la donnée.
5) Opération de type OU-EXCLUSIF avec la partie gauche de la donnée en entrée.

L'exécution des opérations 1) et 4) fait intervenir des manipulations de données bits par bits. En enregistrant au préalable la consommation de courant correspondant à une exécution de l'algorithme lorsque ce bit est à 1 et la consommation de courant lorsque ce bit est à 0, il est possible de retrouver la valeur de ce bit en comparant la consommation de courant avec ce qui a été enregistré au préalable.

Il est possible de protéger l'exécution des opérations 1) et 4) faisant intervenir des manipulations de données bits par bits contre des attaques de type DPA.

Pour cela, avant l'exécution d'une opération de type permutation, notée par la suite P, sur une donnée, notée par la suite D, on effectue le tirage d'un nombre aléatoire, noté par la suite U, ayant la même taille que D. On combine D et U par une opération de type OU-EXCLUSIF, pour obtenir une donnée notée H. On effectue l'opération P successivement sur U et sur H, pour obtenir les résultats notés PU et PH respectivement. Le résultat de l'opération P sur D s'obtient en combinant PU et PH par une opération de type OU-EXCLUSIF.

Ce procédé s'applique aux opérations 1) et 4) décrites précédemment.

Par l'application de ce procédé à une opération de type permutation, les données sur lesquelles on effectue une manipulation bit par bit sont aléatoires. Il n'est alors plus possible de réaliser l'attaque de type DPA décrite précédemment. En effet l'attaque de type DPA décrite précédemment nécessite l'enregistrement préalable de la consommation de courant lorsqu'un bit déterminé de la donnée manipulée est à 1 et de la consommation de courant lorsque ce bit est à 0. Avec le procédé décrit précédemment, cet enregistrement n'est plus possible car les données manipulées U et H sont aléatoires, et sont donc susceptibles de changer lors de chaque nouvelle exécution. De plus les données manipulées U et H ne sont pas connues à l'extérieur de la carte.

Cependant, il arrive dans certains cas qu'un procédé de chiffrement à clef secrète utilise également des opérations arithmétiques de type addition modulo une puissance de deux. Il convient dans ce cas de protéger également ces opérations. Soit D la donnée à protéger. La méthode consiste à ajouter à D un aléa R modulo une puissance de deux. Ainsi, la donnée D+R est aléatoire et l'attaquant ne peut pas obtenir d'information sur D.

Ainsi, il arrive dans certains cas qu'un procédé de chiffrement à clef secrète manipule à la fois des données de la forme D xor R, où xor dénote l'opération de type OU-EXCLUSIF, et des données de la forme D+R, où + dénote l'addition de deux entiers modulo une puissance de deux.

Le procédé de l'invention consiste en une méthode permettant de passer rapidement et de façon sécurisée d'une représentation à l'autre. La représentation D xor R sera appelée par la suite représentation booléenne et la représentation D+R sera appelée représentation arithmétique.

Le premier procédé de l'invention décrit une méthode permettant de passer efficacement d'une représentation

EP 1 348 275 B1

booléenne à une représentation arithmétique. On note x la donnée initiale à protéger, et on note x' la donnée protégée. On note K la taille en bits des entiers manipulés. On a ainsi x=x' xor r, où r est un entier aléatoire. Le procédé comporte les étapes suivantes :

1) Pour toutes les valeurs de l'entier y possibles, générer une table T contenant les valeurs :

$$T(y) = (y \text{ xor } r) - r$$

2) Mettre dans un entier A la valeur de T(x')

Le procédé décrit précédemment permet d'obtenir une valeur A telle que x=A+r, en utilisant une table T prenant en entrée un entier de K bits et renvoyant en sortie un entier de K bits, la table T étant dite table de K bits vers K bits. On obtient ainsi une représentation arithmétique de l'entier x. Il est impossible pour l'attaquant de déduire du procédé précédent une quelconque information sur l'entier x, car la variable x n'a jamais été manipulée.
Le premier procédé de l'invention comprend une variante permettant de réduire la taille de la table T utilisée. En effet, le premier procédé tel que décrit précédemment nécessite une table de taille K bits vers K bits, lorsque la taille des entiers manipulé est de K bits. La table contient donc $2^K$ entiers de K bits, ce qui pour des valeurs de K supérieures à 8 rend le procédé impraticable. La variante du premier procédé permet d'effectuer des conversions sur des entiers longs, par exemple, de taille 32 bits, tout en utilisant une table de K bits vers K bits, avec K petit, par exemple K=4.
La variante du premier procédé consiste à effectuer une conversion d'un masquage booléen vers un masquage arithmétique pour des entiers de taille 2.K bits, en utilisant la table T précédente de K bits vers K bits. La variante décrite utilise une autre table dite table de retenue et notée C, prenant en entrée un entier r, qui est initialisée de la façon suivante :

1) Générer un entier aléatoire $\gamma$ de taille K bits.
2) Pour tous les entiers A de K bits, définir C (A) =1+$\gamma$ mod $2^K$ si A+r $\geq$ $2^K$ C (A) = $\gamma$ si A+r < $2^K$

Le procédé de conversion de la variante prend en entrée 2 entiers x' et r' de taille 2.K bits, tels que x=x' xor r', et renvoie en sortie deux entiers A et r" de taille 2.K bits, tels que x=A+r" mod $2^{(2.K)}$. Le procédé comprend les étapes suivantes :

1) Séparer x' en $x_1' \parallel x_2'$ , où $x_1'$ et $x_2'$ sont des entiers de K bits.
2) Séparer r' en $r_1' \parallel r_2'$ , où $r_1'$ et $r_2'$ sont des entiers de K bits.
3) Remplacer $x_1'$ par $x_1'$ xor r
4) Remplacer $x_1'$ par $x_1'$ xor $r_1'$
5) Remplacer $x_2'$ par $x_2'$ xor r
6) Remplacer $x_2'$ par $x_2'$ xor $r_2'$
7) Effectuer $A_1=T(x_1')$ et $A_2=T(x_2')$
8) Remplacer $A_1$ par $A_1 - C(A_2)$ mod $2^K$
9) Effectuer $r_1 = r + \gamma$ mod $2^K$
10) Retourner A= $A_1 \parallel A_2$ et r" = $r_1 \parallel r$

La variante de ce premier procédé peut être itérée de façon à effectuer une conversion booléenne vers arithmétique pour des entiers de taille supérieure à 2K bits, en utilisant une table T et une table C de K bits vers K bits.
Le second procédé de l'invention décrit une méthode permettant de passer efficacement d'une représentation arithmétique à une représentation booléenne. On note x la donnée initiale à protéger, et on note A la donnée protégée. On note K la taille en bits des entiers manipulés. On a ainsi x=A+r, où r est un entier aléatoire. Le procédé comporte les étapes suivantes :

1. Pour toutes les valeurs de l'entier y possible, générer une table T contenant les valeurs :

$$T(y) = (y+r) \text{ xor } r.$$

2. Mettre dans la variable x' la valeur de T(A).

Le procédé décrit précédemment permet donc d'obtenir une valeur x' telle que x=x' xor r, en utilisant une table T de K bits vers K bits. On obtient ainsi une représentation booléenne de la variable x. Il est impossible pour l'attaquant de déduire du procédé précédent une quelconque information sur l'entier x, car la variable x n'a jamais été manipulée.

Le second procédé de l'invention comprend une variante permettant de réduire la taille de la table T utilisée. En effet, le second procédé tel que décrit précédemment nécessite une table de taille K bits vers K bits, lorsque la taille des entiers manipulés est de K bits. La table contient donc $2^K$ entiers de K bits, ce qui pour des valeurs de K supérieures à 8 rend le procédé impraticable. La variante du second procédé permet d'effectuer des conversions sur des entiers longs, par exemple, de taille 32 bits, tout en utilisant une table de K bits vers K bits, avec K petit, par exemple K=4.

La variante du second procédé consiste à effectuer une conversion d'un masquage arithmétique vers un masquage booléen pour des entiers de taille 2.K bits, en utilisant la table T précédente de K bits vers K bits. La variante du second procédé utilise également la table C définie dans la variante du premier procédé.

Le procédé de conversion de la variante prend en entrée deux entiers A et r' de taille 2.K bits tels que x=A+ r' mod $2^{(2.K)}$ et renvoie en sortie deux entiers x' et r'' de taille 2.K bits, tels que x=x' xor r''. Le procédé comprend les étapes suivantes :

1) Générer un aléa a de taille K bits.
2) Soit G=a ∥ r
3) Remplacer A par A-G mod $2^{(2.K)}$
4) Remplacer A par A+r'mod $2^{(2.K)}$
5) Séparer A en $A_1$ ∥ $A_2$ avec $A_1$ et $A_2$ de taille K bits.
6) Remplacer $A_1$ par $A_1$ + C ($A_2$) mod $2^K$
7) Remplacer a par a - γ mod $2^K$
8) Remplacer $A_1$ par $A_1$ - r mod $2^K$
9) Remplacer $A_1$ par $A_1$ + a mod $2^K$
10) Effectuer $x'_1$=T($A_1$) et $x'_2$ =T($A_2$)
11) Remplacer $x_1$' par $x_1$' xor γ
12) Remplacer $x_1$' par $x_1$' xor r
13) Retourner x' = $x_1$' ∥ $x_2$' et r''=γ∥ r

La variante de ce second procédé peut être itérée de façon à effectuer une conversion arithmétique vers booléen pour des entiers de taille supérieure à 2K bits, en utilisant une table T et une table C de K bits vers K bits.

Ainsi, ces deux procédés ainsi que leur variante respective permettent de passer efficacement et de manière sécurisée d'une représentation booléenne vers une représentation arithmétique et réciproquement. Ces deux procédés sont particulièrement destinés à être utilisés dans un objet portable électronique de type carte à puce.

**Revendications**

1. Procédé de contre-mesure utilisant contre des attaques de type DPA une représentation arithmétique et une représentation booléenne consistant à empêcher l'enregistrement préalable de la consommation du courant générée par des manipulations de bits par bits en permettant de passer efficacement de ladite représentation booléenne des données, ladite représentation étant notée D xor R, xor désignant l'opération de OU-EXCLUSIF, vers ladite représentation arithmétique des données, ladite représentation étant notée D+R, ledit procédé utilisant une donnée x à protéger, la donnée protégée étant notée x' avec x=x' xor r, l'entier r étant un entier aléatoire, ledit procédé permettant d'obtenir une valeur A telle que x=A+r, ledit procédé étant **caractérisé en ce qu'**il comporte les 2 étapes suivantes :

   1) 1 Pour toutes les valeurs de l'entier y possibles, générer une table T contenant les valeurs : T(y)=(y xor r)-r
   1)2 Mettre dans l'entier A la valeur de T(x')

2. Procédé de contre-mesure contre des attaques de type DPA, utilisant une représentation arithmétique et une représentation booléenne consistant à empêcher l'enregistrement préalable de la consommation de courant générée par des manipulations bits par bits, en permettant de passer efficacement de ladite représentation arithmétique des données, ladite représentation étant notée D+R , vers ladite représentation booléenne des données, ladite représentation étant notée D xor R, xor désignant l'opération de OU-EXCLUSIF, ledit procédé utilisant une donnée x à protéger, la donnée protégée étant notée A avec x=A+r, l'entier r étant un entier aléatoire, ledit procédé permettant d'obtenir une valeur x' telle que x=x' xor r, ledit procédé étant **caractérisé en ce qu'**il comporte les 2 étapes suivantes :

   2)1 Pour toutes les valeurs de l'entier y possibles, générer une table T contenant les valeurs : T(y)=(y+r) xor r

2)2 Mettre dans la variable x' la valeur de T(A).

3. Procédé de conversion selon la revendication 1 réalisant une conversion d'un masquage booléen vers un masquage arithmétique pour des entiers de taille 2.K bits, utilisant une table T de K bits vers K bits, ledit procédé utilisant une table dite table de retenue notée C, ladite table prenant en entrée un entier r et étant initialisée à l'aide des deux étapes suivantes :

   1) Générer un entier aléatoire $\gamma$ de taille K bits.
   2) Pour tous les entiers A de K bits, définir C(A)=1+$\gamma$ mod 2^K si A+r $\geq$ 2^K C (A) = $\gamma$ si A+r < 2^K

   ledit procédé prenant en entrée 2 entiers x' et r' de taille 2.K bits, tels que x=x' xor r', et renvoyant en sortie deux entiers A et r" de taille 2.K bits, tels que x=A+r" mod 2^ (2.K), **caractérisé en ce qu'**il comprend les étapes suivantes :

   1) Séparer x' en $x_1$' $\parallel X_2$', où $x_1$' et $x_2$' sont des entiers de K bits.
   2) Séparer r' en $r_1$' $\parallel r_2$', où $r_1$' et $r_2$' sont des entiers de K bits.
   3) Remplacer $x_1$' par $x_1$' xor r
   4) Remplacer $x_1$' par $x_1$' xor $r_1$'
   5) Remplacer $x_2$' par $x_2$' xor r
   6) Remplacer $x_2$' par $x_2$' xor $r_2$'
   7) Effectuer $A_1$=T($x_1$') et $A_2$=T($x_2$')
   8) Remplacer $A_1$= $A_1$ - C ($A_2$) mod 2^K
   9) Effectuer $r_1$= r + $\gamma$ mod 2^K
   10) Retourner A= $A_1$ $\parallel$ $A_2$ et r" = $r_1$ $\parallel$ r

4. Procédé de conversion selon la revendication 3,
   **caractérisé en ce qu'**il est itéré pour effectuer une conversion d'un masquage booléen vers un masquage arithmétique pour des entiers de taille supérieure à 2K bits, en utilisant une table T et une table C de K bits vers K bits.

5. Procédé de conversion suivant les revendication 2 réalisant une conversion d'un masquage arithmétique vers un masquage booléen pour des entiers de taille 2.K bits, ledit procédé utilisant une table T précédente de K bits vers K bits, ledit procédé utilisant une table dite table de retenue notée C, ladite table prenant en entrée un entier r et étant initialisée à l'aide des deux étapes suivantes :

   1) Générer un entier aléatoire $\gamma$ de taille K bits.
   2) Pour tous les entiers A de K bits, définir C(A)=1+$\gamma$ mod 2^K si A+r $\geq$ 2^K C (A) = $\gamma$ si A+r < 2^K

   ledit procédé prenant en entrée deux entiers A et r' de taille 2.K bits tels que x=A+ r' mod 2^ (2.K) et renvoyant en sortie deux entiers x' et r" de taille 2.K bits, tels que x=x' xor r", **caractérisé en ce qu'**il comprend les étapes suivantes :

   1) Générer un aléa a de taille K bits.
   2) Soit G=a $\parallel$ r
   3) Remplacer A par A-G mod 2^(2.K)
   4) Remplacer A par A+r'mod 2^(2.K)
   5) Séparer A en $A_1$ $\parallel$ $A_2$ avec $A_1$ et $A_2$ de taille K bits.
   6) Remplacer $A_1$ par $A_1$ + C($A_2$) mod 2^K
   7) Remplacer a par a - $\gamma$ mod 2^K
   8) Remplacer $A_1$ par $A_1$ - r mod 2^K
   9) Remplacer $A_1$ par $A_1$ + a mod 2^K
   10) Effectuer $x'_1$=T($A_1$) et $x'_2$ =T($A_2$)
   11) Remplacer $x_1$' par $x_1$' xor $\gamma$
   12) Remplacer $x_1$' par $x_1$' xor r
   13) Retourner x'= $x_1$' $\parallel$ $x_2$' et r''=$\gamma$ $\parallel$ r

6. Procédé de conversion selon la revendication 5, **caractérisé en ce qu'**il est itéré pour effectuer une conversion d'un masquage arithmétique vers un masquage booléen pour des entiers de taille supérieure à 2K bits, en utilisant une table T et une table C de K bits vers K bits.

7. Procédé de chiffrement à clef secrète, **caractérisé en ce qu'**il utilise l'une quelconque des revendications précédentes.

8. Procédé suivant l'une quelconque des revendications précédentes, **caractérisé en ce qu'**il s'applique à un objet électronique portable de type carte à puce.

**Claims**

1. A method for counter-measuring against attacks of the DPA type, using an arithmetic representation and a Boolean representation consisting in preventing the previous recording of the current consumption caused by bit per bit operations, by allowing to efficiently switch from said Boolean representation of data, with said representation being noted D xor R, xor designating the EXCLUSIVE-OR operation, to said arithmetic representation of data, with said representation being noted D + R, said method using data x to be protected, with the protected data being noted x', with x = x' xor r, the integer r being a random integer, said method performing it possible to obtain a value A such that x = A + r, said method being **characterized in that** it includes the two following steps:

    1) 1 For all the possible values of the integer y, generate a table T containing the values: T(y) = (y xor r) - r
    1) 2 Place the value T(x') in the variable A.

2. A method for counter-measuring against attacks of the DPA type, using an arithmetic representation and a Boolean representation consisting in preventing the previous recording of the current consumption caused by bit per bit operations, by allowing to efficiently switch from said arithmetic representation of data, with said representation being noted D + R, to said Boolean representation of data, with said representation being noted D xor R, with xor designating the EXCLUSIVE-OR operation, said method using data x to be protected, with the protected data being noted A, with x = A + r, the integer r being a random integer, said method performing it possible to obtain a value x' such that x = x' xor r, said method being **characterized in that** it includes the two following steps:

    2) 1 For all the possible values of the integer y, generate a table T containing the values: T(y) = (y + r) xor r
    2) 2 Place the value T(A) in the variable x'.

3. A conversion method according to claim 1, performing a conversion from a Boolean masking into an arithmetic masking for integers having a size of 2.K bits, using a table T of K bits to K bits, said method using a so-called carry-digit table taking an integer r as an input and being initialized by the two following steps:

    1) Generate a random integer $\gamma$ having a size of K bits,
    2) For all the integers A having K bits, define

$$C(A) = 1 + \gamma \bmod 2^{\wedge}K, \text{ if } A + r \geq 2^{\wedge}K$$

$$C(A) = \gamma, \text{ if } A + r < 2^{\wedge}K$$

said method taking as an input two integers x' and r' having a size of 2.K bits such that x = x' xor r', and returning as an output two integers A and r" having a size of 2.K bits, such that x = A + r" mod 2^(2.K), **characterized in that** it comprises the following steps:

    1) Divide x' into $x_1' \| x_2'$, where $x_1'$ and $x_2'$ are integers having K bits
    2) Divide r' into $r_1' \| r_2'$, where $r_1'$ and $r_2'$ are integers having K bits
    3) Substitute $x_1'$ xor r for $x_1'$
    4) Substitute $x_1'$ xor $r_1'$ for $x_1'$
    5) Substitute $x_2'$ xor r for $x_2'$
    6) Substitute $x_2'$ xor $r_2'$ for $x_2'$
    7) Perform $A_1 = T(x_1')$ and $A_2 = T(x_2')$
    8) Substitute $A_1 = A_1 - C(A_2) \bmod 2^{\wedge}K$
    9) Perform $r_1 = r + \gamma \bmod 2^{\wedge}K$
    10) Return $A = A_1 \| A_2$ and r" = $r_1 \| r$

4. A conversion method according to claim 3, **characterised in that** it is iterated for performing a conversion from a Boolean masking into an arithmetic masking for integers having a size greater than 2K bits, using a table T and a table C of K bits to K bits.

5. A conversion method according to claim 2, performing a conversion from an arithmetic masking into a Boolean masking for integers having a size of 2.K bits, said method using a previous table T of K bits to K bits, said method using a so-called carry-digit table taking an integer r as an input and being initialized by the two following steps:

1) Generate a random integer $\gamma$ having a size of K bits,
2) For all the K bit integers A, define
$C(A) = 1 + \gamma$ mod 2^K, if $A + r \geq 2^K$
$C(A) = \gamma$, if $A + r < 2^K$
said method taking as an input two integers A and r' having a size of 2.K bits such that $x = A + r'$ mod 2^( 2.K) and returning as an output two integers x' and r'' having a size of 2.K bits, such that x = x' xor r ", **characterized in that** it comprises the following steps:

1) Generate a random integer a having a size of K bits
2) Assuming that $G = a\|r$
3) Substitute A-G mod 2^(2.K) for A
4) Substitute A + r' mod 2^(2.K) for A
5) Divide A into $A_1\|A_2$, with $A_1$ and $A_2$ having a size of K bits
6) Substitute $A_1 + C(A_2)$ mod 2^K for $A_1$
7) Substitute $a - \gamma$ mod 2^K for a
8) Substitute $A_1 - r$ mod 2^K for $A_1$
9) Substitute $A_1 + a$ mod 2^K for $A_1$
10) Perform $x'_1 = T(A_1)$ and $x'_2 = T(A_2)$
11) Substitute $x_1'$ xor $\gamma$ for $x_1'$
12) Substitute $x_1'$ xor r for $x_1'$
13) Return x' = $x_1'\|x_2'$ and r" = $\gamma\|r$

6. A conversion method according to claim 6, **characterised in that** it is iterated for performing a conversion from an arithmetic masking into a Boolean masking for integers having a size greater than 2K bits, using a table T and a table C of K bits to K bits.

7. A secret key encryption method, **characterised in that** it uses any one of the preceding claims.

8. A method according to any one of the preceding claims, **characterised in that** it further applies to a portable electronic device of the chip card type.

**Patentansprüche**

1. Gegenmaßnahmenverfahren, das gegen Angriffe vom Typ DPA eine arithmetische Darstellung und eine boolesche Darstellung umfasst, die darin besteht, die vorherige Registrierung des Stromverbrauchs zu verhindern, der durch die Manipulationen Bit pro Bit generiert wird, indem der effiziente Übergang der genannten booleschen Darstellung der Daten, wobei die genannte Darstellung mit D xor R bezeichnet wird, wobei xor die Operation EXKLUSIVES ODER bezeichnet, zu der genannten arithmetischen Darstellung der Daten, wobei die genannte Darstellung mit D+R bezeichnet wird, erlaubt wird, wobei das genannte Verfahren eine zu schützende Angabe x verwendet, wobei die geschützte Angabe mit x' bezeichnet wird, wobei x=x' xor r ist, wobei die ganze Zahl r eine zufällige ganze Zahl ist, wobei das genannte Verfahren den Erhalt eines Wertes A, wie z. B. x=A+r erlaubt, wobei das genannte Verfahren **dadurch gekennzeichnet ist, dass** es die 2 folgenden Stufen umfasst:

1) 1 Für alle möglichen Werte der ganzen Zahl y eine Tafel T generieren, die die Werte T(y) = (y xor r) - r enthält
1) 2 In die ganze Zahl A den Wert von T (x') einstellen.

2. Gegenmaßnahmenverfahren gegen Angriffe vom Typ DPA, das eine arithmetische Darstellung und eine boolesche Darstellung enthält, das in der Verhinderung der vorherigen Speicherung des Stromverbrauchs besteht, der von den Manipulationen Bit für Bit generiert wird, indem der effiziente Übergang der genannten arithmetischen Darstellung der Daten, wobei die genannte Darstellung mit D+R dargestellt wird, zu der genannten booleschen Darstellung der Daten, wobei die genannte Darstellung mit D xor R bezeichnet wird, wobei xor die Operation des EXKLUSIVEN ODER darstellt, erlaubt wird,

wobei das genannte Verfahren eine zu schützende Angabe x verwendet, wobei die schützende Angabe mit A bezeichnet wird, wobei x=A+r, wobei die ganze Zahl r eine zufällige ganze Zahl ist, wobei das genannte Verfahren den Erhalt eines Wertes x' erlaubt, wie z. B. x=x' xor r, wobei das genannte Verfahren **dadurch gekennzeichnet ist, dass** es die folgenden 2 Stufen umfasst:

> 2) 1 Für alle möglichen Werte der ganzen Zahl y eine Tafel T generieren, die die Werte T(y) = (y+r) xor r enthält
> 2) 2 In die Variable x' den Wert von T(A) einstellen.

**3.** Umwandlungsverfahren gemäß Anspruch 1, das eine Umwandlung einer booleschen Abdeckung zu einer arithmetischen Abdeckung für ganze Zahlen der Größe 2.K Bit realisieren, die eine Tafel T von K Bit zu K Bit verwenden, wobei das genannte Verfahren eine Tafel verwendet, bezeichnet als Übertragungstafel, bezeichnet mit C, wobei die genannte Tafel am Eingang eine ganze Zahl r erhält und mithilfe der zwei folgenden Stufen initialisiert wird:

> 1) Generieren einer zufälligen ganzen Zahl y in der Größe von K Bit.
> 2) Für alle ganzen Zahlen A bis K Bit, Definieren von C(A) = 1+y mod 2^K, wenn A+r $\geq$ 2+K

$$C(A) = y, \text{ wenn } A+r < 2^K$$

wobei das genannte Verfahren am Eingang 2 ganze Zahlen x' und r' in der Größe von 2.K Bit erhält, wie z. B. x=x' xor r', und am Ausgang zwei ganze Zahlen A und r" in der Größe von 2.K Bit zurücksendet, wie z. B. x=A+r" mod 2^(2.K) , **dadurch gekennzeichnet, dass** es die folgenden Stufen umfasst:

> 1) Trennung von x' in $x_1$' $\parallel$ $x_2$', bei der $x_1$' und $x_2$' ganze Zahlen mit K Bit sind.
> 2) Trennung von r' in $r_1$' $\parallel$ $r_2$', bei der $r_1$' und $r_2$' ganze Zahlen mit K Bit sind.
> 3) Ersetzen von $x_1$' durch $x_1$' xor r
> 4) Ersetzen von $x_1$' durch $x_1$' xor $r_1$'
> 5) Ersetzen von $x_2$' durch $x_2$' xor r
> 6) Ersetzten von $x_2$' durch $x_2$' xor $r_2$'
> 7) Durchführen von $A_1$=T ($x_1$') und $A_2$=T ($x_2$')
> 8) Ersetzen von $A_1$ = $A_1$ - C($A_2$) mod 2^K
> 9) Durchführen von $r_1$ = r + y mod 2^K
> 19) Umkehren von A = $A_1$ $\parallel$ $A_2$ und r" = $r_1$ $\parallel$ r

**4.** Umwandlungsverfahren gemäß Anspruch 3, **dadurch gekennzeichnet, dass** es wiederholt ist, um eine Umwandlung einer booleschen Abdeckung zu einer arithmetischen Abdeckung für ganze Zahlen in einer Größe von mehr als 2K Bit unter Verwendung einer Tafel T und einer Tafel C von K Bit zu K Bit durchzuführen.

**5.** Umwandlungsverfahren gemäß Anspruch 2, das eine Umwandlung einer arithmetischen Abdeckung zu einer booleschen Maskierung für ganze Zahlen in der Größe von 2.K Bit realisiert, wobei das genannte Verfahren eine vorherige Tafel T von K Bit zu K Bit verwendet, wobei das genannte Verfahren eine Tafel, bezeichnet als Übertragungstafel, bezeichnet mit C, verwendet, wobei die genannte Tafel am Eingang eine ganze Zahl r erhält und mithilfe der zwei folgenden Stufen initialisiert wird:

> 1) Generieren einer zufälligen ganzen Zahl y in der Größe von K Bit
> 2) Für alle ganzen Zahlen A von K Bit definieren von C(A) =1+y mod 2^K, wenn A+r $\geq$ 2^K

$$C(A) = y, \text{ wenn } A+r < 2^K.$$

wobei das genannte Verfahren am Eingang zwei ganze Zahlen A und r' in der Größe von 2.K Bit erhält, wie z. B. x=A+ r' mod 2^(2.K) und am Ausgang zwei ganze Zahlen x' und r " in der Größe von 2.K Bit zurücksendet, wie z. B. x=x' xor r", **dadurch gekennzeichnet, dass** es die folgenden Stufen umfasst:

1) Generieren einer zufälligen Zahl a in der Größe von K Bit.

2) D. h. G=a ∥ r

3) Ersetzen von A durch A-G mod 2^^ (2.K)

4) Ersetzen von A durch A+r' mod 2^(2.K)

5) Trennen von A in $A_1$ ∥ $A_2$, wobei $A_1$ und $A_2$ die Größe von K Bit haben

6) Ersetzen von $A_1$ durch $A_1$ + C ($A_2$) mod 2^K

7) Ersetzen von a durch a - y mod 2^K

8) Ersetzen von $A_1$ durch $A_1$ - r mod 2^K

9) Ersetzen von $A_1$ durch $A_1$ + a mod 2^K

10) Durchführen von $x'_1$ = T($A_1$) und $x'_2$ = T($A_2$)

11) Ersetzen von $x_1$' durch $x_1$' xor y

12) Ersetzen von $x_1$' durch $x_1$' xor r

13) Umkehren von x' = $x_1$' ∥ $x_2$' und r'' =y ∥ r

6. Umwandlungsverfahren gemäß Anspruch 5, **dadurch gekennzeichnet, dass** es wiederholt ist, um eine Umwandlung einer arithmetischen Abdeckung zu einer booleschen Abdeckung für ganze Zahlen in einer Größe von mehr als 2K Bit unter Verwendung einer Tafel T und einer Tafel C von K Bit zu K Bit durchzuführen.

7. Verschlüsselungsverfahren mit geheimem Schlüssel, **dadurch gekennzeichnet, dass** es einen der vorherigen Ansprüche nutzt.

8. Verfahren gemäß einem der vorherigen Ansprüche, **dadurch gekennzeichnet, dass** es auf ein tragbares elektronisches Objekt vom Typ Chipkarte angewendet wird.